# EUROPEAN PATENT SPECIFICATION

(11) **EP 2 377 410 B1**
(45) Date of publication and mention of the grant of the patent: **28.02.2018**
(21) Application number: 10731019.5
(22) Date of filing: 11.01.2010
(51) Int. Cl.: A23L 2/02, A23L 2/04, A23L 2/06, A23L 2/08, A23L 2/00, A23L 2/46, A23L 2/68

(54) **PROCESSED FRUIT JUICE OR ITS FRUIT JUICE CONCENTRATE OF CITRUS L., NEWHALL NAVEL, THEIR PREPARATION METHOD AND PRODUCT CONTAINING THEM**
VERARBEITETER FRUCHTSAFT BZW. FRUCHTSAFTKONZENTRAT AUS CITRUS L., NEWHALL NAVEL, ZUBEREITUNGSVERFAHREN UND DIESE ENTHALTENDES PRODUKT
PUR JUS DE FRUIT TRANSFORMÉ OU SON CONCENTRÉ DE JUS DE FRUIT DE CITRUS L., NEWHALL NAVEL, LEUR MÉTHODE D'ÉLABORATION ET PRODUIT LES CONTENANT

(30) Priority: 13.01.2009 CN 200910000665
(43) Date of publication of application: 19.10.2011
(73) Proprietor: Yang Sheng Tang Company, Ltd., Haikou City, Hainan 570216 (CN)
(72) Inventor: SHI, Yonghui, Haikou Hainan 570216 (CN)
(74) Representative: Cohausz Hannig Borkowski Wißgott
(86) International application number: PCT/CN2010/000039
(87) International publication number: WO 2010/081385

(56) References cited:
- US-A- 4 374 865
- US-A- 4 818 555
- US-A2- P 187 74P
- Anonymous: "Verordnung über die Zulassung von Zusatzstoffen zu Lebensmitteln zu technologischen Zwecken- Anlage 4 (zu § 5 Abs. 1 und § 7)Begrenzt zugelassene Zusatzstoffe", Gesetze im Internet- BGBL , 2000, pages 1-23, XP2712879, Retrieved from the Internet: URL:http://www.gesetze-im-internet.de/zzul v_1998/anlage_4_16.html#Seitenanfang [retrieved on 2013-09-13]
- Souci Siegfried Walter; Fachmann Walter; Kraut Heinrich; Scherz Heimo; Senser Friedrich: "Food composition Food composition and nutrition tables = Die Zusammensetzung der Lebensmittel, Nährwert-Tabellen = La composition des aliments, tableaux des valeurs nutritives,", 2000, Medpharm Scientific Publishers, Stuttgart, Germany, XP002712878, pages 1037-1038, * the whole document *
- YIN YAN ET AL.: 'Study on the fruit quality and juice processing characteristics of five hybrid orange cultivars' FOOD & MACHINERY vol. 22, no. 6, November 2006, pages 68 - 70
- LI SHA ET AL.: 'An Approach to Production of Orange Juice' JOURNAL OF XICHANG AGRICULTURAL COLLEGE vol. 15, no. 2, June 2001, pages 30 - 33
- MA PEIQIA ET AL.: 'Nutritional ingredients and aromatic components analysis for several sweet oranges' GUANGDONG, GUANGDONG AGRICULTURAL SCIENCES vol. 3, 2008, pages 18 - 20
- CHEN HAIJUN: 'Discussion on the Production Process and Quality Testing of Orange Juice' JOURNAL OF WUHAN POLYTECHNIC UNIVERSITY vol. 27, no. 3, September 2008, pages 23 - 26
- CANO A ET AL: "Bioactive compounds in different citrus varieties. Discrimination among cultivars", JOURNAL OF FOOD COMPOSITION AND ANALYSIS, ACADEMIC PRESS, LONDON, GB, vol. 21, no. 5, 1 August 2008 (2008-08-01) , pages 377-381, XP022710141, ISSN: 0889-1575, DOI: 10.1016/J.JFCA.2008.03.005 [retrieved on 2008-05-02]

## Description

### Technical Field

The present invention relates to processed citrus fruit juice or the concentrate thereof, a method for producing a citrus fruit juice or the concentrate thereof and use of the processed citrus fruit juice or the concentrate thereof in the production of an edible product products comprising them.

### Background Art

The term "citrus fruit" usually is the general term for orange fruit and tangerine fruit. Orange fruit and tangerine fruit are abundant in vitamins and moderate in sweetness and sourness, and thus are fruits often consumed in daily life. Orange juice from citrus fruits is needed in large amount in daily life, said juice is generally obtained from oranges specifically used for orange juice production, such as Hamlin orange. Such Hamlin has a relatively high acidity and cannot be consumed, in addition, the orange juice processed thereby has a sugar-acid ratio of no greater than 12:1. Navel orange is a kind of C. sinensis. Osbeck, referring to the general term of oranges with a navel-like shape on the bottom, mainly including: Newhall navel orange, Bonanza navel orange, Forst nucallar navel orange s, Robertson 35# navel orange, Huahong (Changhong) navel orange, Navelina navel orange. Although large quantities of oranges are brought to the market in harvest seasons each year, a significant amount of the navel oranges would need to be processed (i.e. citrus fruits including navel oranges are processed into the juice or puree thereof) due to problems in terms of transportation, preservation, price variation, and the appearance of the navel oranges, as well as market demand for orange juice products. However, citrus fruits such as navel oranges contain limonin or limonin precursors that may generate more limonin during the processing procedures, resulting in bitterness in the processed juice. In addition, during the course of processing citrus fruits such as navel oranges, unfavorable smells such as odour may be generated when heating citrus fruits such as navel oranges. Due to the bitterness and unfavorable smells, citrus fruits such as navel oranges cannot be used for orange juice production, leading to the consequence that large quantities of citrus fruits such as navel oranges are discarded as not being able to be consumed or processed in time, thereby causing a great economic loss for regions producing these citrus fruits such as navel oranges. Hence, it is urgently and highly desired to find industrial technical means for processing citrus fruits especially navel oranges into citrus fruit juice substantially free of bitterness and unfavorable smell.

US 4 818 555 A teaches a method of pasteurization of orange juice.

Verordnung über die Zulassung von Zusatzstoffen zu Lebensmitteln zu technologischen Zwecken, Anlage 4, provides a general list of additives under the German Foodstuff Law which allow German manufacturers to add additives to various types of food including organic acids.

Souci, Siegfried Walter et al, Food Composition Food Composition and Nutition Tables Stuttgart 2000, p 1037 *et seq* discloses the content of various substances in juices including acidity.

US 4 374 865 A discloses a method of blending different varieties of oranges to adjust the sugar to acid ratio of the oranges.

US-P 187 74P discloses orange tree variety M9 which fruits have been processed into orange juice

Cano et al bioactive compounds in different citrus Varieties. Discrimination among cultivars in Journal of Food Composition and Analysis, Academic Press, London Vol 21, no 5, August 2008, pp 377 - 381 discloses bioactive compounds in different citrus varieties, namely ascorbic acid and flavonoids and how to analyze it.

### Detailed description of the Invention

After comprehensive and intensive research, the present inventors found that the bitterness and unfavorable smell (such as odour) of the citrus fruit juice or puree processed from citrus fruit such as navel orange can be removed by adding an acid harmless to human and simultaneously performing a physical treatment while processing the citrus fruit, and the orange juice thus processed has a sugar-acid ratio of 14:1 to 20:1. The present invention is made based on the above finding.

Thus, the first aspect of the present invention relates to processed citrus fruit juice or the concentrate thereof, characterized in that said juice or the concentrate thereof is substantially free of bitterness and unfavorable smell such as odour, and has a sugar-acid ratio of 14:1 to 20:1, preferably 14:1 to 18:1, wherein the citrus fruit is navel orange and wherein the navel orange is Newhall navel orange, and wherein said citrus fruit juice or the concentrate thereof is produced by a method comprising: a) squeezing a citrus fruit that has been integrally washed with a squeezer to produce a citrus fruit juice, simultaneously adding an acid harmless to human so that the squeezed citrus fruit juice has a total acid content of 0.85-1.0wt%; b) heating the citrus fruit juice obtained in a) above at 75°C±5°C to 80°C±2°C for 30±10 to 60±5 seconds to obtain a citrus fruit juice substantially free of bitterness and free of unfavorable smell; or c) if necessary, further concentrating the citrus fruit juice in b) according to a conventional method in the art to a volume that is 1/2-1/10, preferably 1/2-1/6, more preferably 1/4-1/6, the volume of the citrus fruit juice, to obtain a concentrate of citrus fruit juice.

According to a preferred embodiment of the Invention the processed citrus fruit juice or the concentrate thereof has a pH of 3.5 or less, preferably 3.4 or less.

The present invention further relates to a method for producing citrus fruit juice or the concentrate thereof, comprising:
a) squeezing a citrus fruit that has been integrally washed with a squeezer to produce citrus fruit juice, simultaneously adding an acid harmless to human so that the squeezed citrus fruit juice or puree has a total acid content of 0.85-1.0wt%;
b) heating the citrus fruit juice obtained in a) above at 75°C±5°C to 80°C±2°C for 30±10 to 60±5 seconds, to obtain fruit juice that is substantially free of bitterness and unfavorable smell; or
c) if necessary, further concentrating the citrus fruit juice in b) according to a conventional method in the art to a volume that is 1/2-1/10, preferably 1/2-1/6, more preferably 1/4-1/6, the volume of the citrus fruit juice, to obtain a concentrate of citrus fruit juice; wherein the citrus fruit is navel orange and wherein the navel orange is Newhall navel orange.

According to a preferred embodiment of the Invention the acid harmless to human is an acid allowed to be added in food industry, including but not limited to citric acid, malic acid.

According to another preferred embodiment of the invention the acid harmless to human is citric acid.

Another aspect of the present invention relates to a use of a processed citrus fruit juice or the concentrate thereof in the production of an edible product.

### Interpretation of terms:

In the present invention, citrus fruit refers to the general term for tangerine fruit and orange fruit, without special limitation on the place of production, as long as bitterness and/or unfavorable smell such as odour would be generated when being processed by conventional method for citrus fruits. Said citrus fruit is a Newhall navel orange.

In the present invention, citrus fruit juice or puree refers to the juice or puree generated when a citrus fruit is squeezed or crushed.

In the present invention, a conventional processing method refers to a common or known method in the art such as the field of citrus fruits processing.

A concentrate of citrus fruit juice refers to a product obtained by concentrating a citrus fruit juice to a volume that is 1/2 to 1/10, preferably 1/2 to 1/6, more preferably 1/4 to 1/6 the volume of the citrus fruit juice.

The sugar-acid ratio of citrus fruit is the ratio between the total sugar and the total acid in the citrus fruit.

In the present invention, the term "processed citrus fruit juice or the concentrate thereof" refers to a citrus fruit juice or the concentrate thereof obtained after treating a natural citrus fruit in the presence of an acid, having at least one of the following features: substantially free of bitterness, free of unfavorable smell such as odour, having a sugar-acid ratio of 14-20:1, preferably 14-18:1; or having a pH of 3.5 or less, preferably 3.4-3.1.

In the present invention, the term "product" is not specifically limited, usually comprising a processed citrus fruit juice or the concentrate thereof, or any form of product obtained by mixing a processed citrus fruit juice or the concentrate thereof with one or more other edible substances, for example, 100% citrus fruit juice, preferably 100% navel orange juice or the concentrate thereof; a mixed fruit juice of a citrus fruit juice or the concentrate thereof and one or more other fruit juice or puree, wherein said other fruit juice is for example, but not limited to: orange juice not derived from navel orange, apple juice, peach juice, vegetable juice, etc.

In the present invention, the term "edible product" has the same meaning as the above "product".

In the present invention, the term "an acid harmless to human" is not specifically limited, as long as it is not harmful for human body, it can be any acid allowed to be added in food industry, including but not limited to citric acid, malic acid, preferably an acid present in citrus fruit itself, including but not limited to citric acid. The amount of the acid harmless to human is not specifically limited, as long as the amount added allows the total acid content of the squeezed citrus fruit juice to be 0.85-1.0wt% and/or allows the processed citrus fruit juice to be free of unfavorable smell such as odour and with a sugar-acid ratio of 14-20:1, preferably 14-18:1.

### Specific embodiments

The following examples are used to further illustrate the present invention, not implying any limitation to the present invention.

### Example 1

### Preparation of a navel orange juice or the concentrate thereof substantially free of bitterness and unfavorable smell such as odour

60 tons of Newhall navel orange with a sugar-acid ratio of 20:1 were spray-washed, and then squeezed in a squeezer. The squeezed juice was fed into a cyclone separator to remove flat seeds in the juice. After removing the flat seeds, the juice was fed into a separator to separate the pulp; the separated clear juice was subjected to acidity assay, and the acidity was about 0.65 wt%. Then, citric acid was added so that the acidity of the clear juice was adjusted to become 0.95wt%, the clear juice with an acidity of 0.95wt% was fed into a sterilizer for sterilization. During sterilization, the clear juice described above was preheated to 58°C for degassing; raising the temperature after degassing; keeping at 80°C for sterilization and inactivation of enzymes; after 30 seconds, it was cooled to below 15°C. Then, the clear juice obtained was placed and stored within 30min in a -18°C refrigeratory. The orange juice produced by the above method was a raw juice, which was sampled for examination when cooled to 15°C, and the results showed that it was rich in orange flavor without unfavorable smell such odour, and is substantially free of bitterness. The detected sugar-acid ratio was about 14.2:1, and the pH was 3.36. 10,000 liters of the above obtained navel orange juice was vacuum concentrated to 2,500 liters using a conventional method in the art of orange juice processing. After examination, the results showed that it was rich in orange flavor without unfavorable smell such odour, and was substantially free of bitterness; the sugar-acid ratio was about 14.2:1, and the pH was about 3.1.

### Comparative Example 1

### Navel orange juice or the concentrate thereof processed using conventional method

20 kg of Newhall navel orange with a sugar-acid ratio of 20:1 were washed, then squeezed in a squeezer. The squeezed juice was fed into a cyclone separator to remove flat seeds in the juice. After removing flat seeds, the juice was fed into a separator to separate the pulp; the separated clear juice was fed into a sterilizer for sterilization. During sterilization, the clear juice was preheated to 60°C for degassing; raising the temperature after degassing; keeping at 98°C for sterilization and inactivation of enzymes; after 30 seconds, it was cooled to bring the temperature of the fruit juice to 15°C. At this temperature of 15°C, the orange juice so processed was tasted and examined, and the results showed obvious bitterness upon drinking, and obvious stewing smell such as odour was emitted during placement, the sugar-acid ratio was 20:1, and the pH was 3.65.

### Comparative Example 2: Orange juice obtained from another orange, Hamlin orange

The same method as in Comparative Example 1 was used, except that the navel orange was replaced by another orange, Hamlin orange. The results showed that the sugar-acid ratio of the obtained orange juice was 11:1, and the pH was 3.32.

It can be seen from the above Comparative Example 1 that following conventional method for orange processing, navel oranges cannot be processed into orange juice suitable for industrial scale.

## Claims

1. A processed citrus fruit juice or the concentrate thereof, wherein said juice or the concentrate thereof is substantially free of bitterness and unfavorable smell such as odour, and has a sugar-acid ratio of 14:1 to 20:1, preferably 14:1 to 18:1, wherein the citrus fruit is navel orange and wherein the navel orange is Newhall navel orange, and wherein said citrus fruit juice or the concentrate thereof is produced by a method comprising:
a) squeezing a citrus fruit that has been integrally washed with a squeezer to produce a citrus fruit juice, simultaneously adding an acid harmless to human so that the squeezed citrus fruit juice has a total acid content of 0.85-1.0wt%;
b) heating the citrus fruit juice obtained in a) above at 75°C±5°C to 80°C±2°C for 30±10 to 60±5 seconds to obtain a citrus fruit juice substantially free of bitterness and free of unfavorable smell; or
c) if necessary, further concentrating the citrus fruit juice in b) according to a conventional method in the art to a volume that is 1/2-1/10, preferably 1/2-1/6, more preferably 1/4-1/6, the volume of the citrus fruit juice, to obtain a concentrate of citrus fruit juice.

2. The processed citrus fruit juice or the concentrate thereof according to claim 1, wherein the processed citrus fruit juice or the concentrate thereof has a pH of 3.5 or less, preferably 3.4 or less.

3. A method for producing a citrus fruit juice or the concentrate thereof according to any one of claims 1-2, comprising:
a) squeezing a citrus fruit that has been integrally washed with a squeezer to produce a citrus fruit juice, simultaneously adding an acid harmless to human so that the squeezed citrus fruit juice has a total acid content of 0.85-1.0wt%;
b) heating the citrus fruit juice obtained in a) above at 75°C±5°C to 80°C±2°C for 30±10 to 60±5 seconds to obtain a citrus fruit juice substantially free of bitterness and free of unfavorable smell; or
c) if necessary, further concentrating the citrus fruit juice in b) according to a conventional method in the art to a volume that is 1/2-1/10, preferably 1/2-1/6, more preferably 1/4-1/6, the volume of the citrus fruit juice, to obtain a concentrate of citrus fruit juice;
wherein the citrus fruit is navel orange and wherein the navel orange is Newhall navel orange.

4. The method according to claim 3, wherein the acid harmless to human is an acid allowed to be added in food industry, including but not limited to citric acid, malic acid.

5. The method according to claim 4, wherein the acid harmless to human is citric acid.

6. Use of the processed citrus fruit juice or the concentrate thereof according to any one of claims 1-2 in the production of an edible product.

## Patentansprüche

1. Verarbeiteter Zitrusfruchtsaft oder dessen Konzentrat, wobei besagter Saft oder das Konzentrat im wesentlichen frei von Bitterkeit und eines unvorteilhaften Geruchs wie Dufts ist; und ein Zucker-Säure-Verhältnis von 14:1 bis 20:1, bevorzugt 14:1 bis 18:1 aufweist, wobei die Zitrusfrucht eine Navelorange und die Navelorange eine Newhall Navelorange ist,
wobei dieser Zitrusfruchtsaft oder dessen Konzentrat hergestellt wird durch ein Verfahren, enthaltend:
a) Auspressen einer Zitrusfrucht, die vollständig mit einer Presse ausgewaschen worden ist unter Erhalt eines Zitrusfruchtsaftes, unter gleichzeitiger Zugabe einer für den Menschen unschädlichen Säure, so dass der ausgepreßte Zitrusfruchtsaft einem Gesamtsäureanteil von 0,85 bis 1,0 Gew.-% aufweist;
b) Erhitzen des gemäß Schritt a) erhaltenden Zitrusfruchtsaftes auf 75 °C ± 5 °C bis 80 °C ± 2 °C für 30 ± 10 bis 60 ± 5 Sekunden unter Erhalt eines Zitrusfruchtsaftes, der im wesentlichen frei von Bitterkeit und eines unvorteilhaften Geruchs ist; oder
c) gegebenenfalls, Aufkonzentrieren des gemäß Schritt b) erhaltenden Zitrusfruchtsaftes in an sich bekannter Weise auf ein Volumen, dass ½ bis 1/10, vorzugsweise ½ bis 1/6, insbesondere % bis 1/6, des Volumens des Zitrusfruchtsaftes entspricht, um ein Konzentrat des Zitrusfruchtsaftes zu erhalten.

2. Verarbeiteter Zitrusfruchtsaft oder dessen Konzentrat nach Anspruch 1, wobei der Zitrusfruchtsaft oder sein Konzentrat einen pH-Wert von 3,5 oder weniger, vorzugsweise 3,4 oder weniger, aufweist.

3. Verfahren zur Herstellung eines Zitrusfruchtsaftes oder dessen Konzentrat nach irgendeinem der Ansprüche 1 oder 2, enthaltend:
a) Auspressen einer Zitrusfrucht, die vollständig mit einer Presse ausgewaschen worden ist unter Erhalt eines Zitrusfruchtsaftes, unter gleichzeitiger Zugabe einer für den Menschen unschädlichen Säure, so dass der ausgepreßte Zitrusfruchtsaft einem Gesamtsäureanteil von 0,85 bis 1,0 Gew.- % aufweist;
b) Erhitzen des gemäß Schritt a) erhaltenden Zitrusfruchtsaftes auf 75 °C ± 5 °C bis 80 °C ± 2 °C für 30 ± 10 bis 60 ± 5 Sekunden unter Erhalt eines Zitrusfruchtsaftes, der im wesentlichen frei von Bitterkeit und eines unvorteilhaften Geruchs ist; oder
c) gegebenenfalls, Aufkonzentrieren des gemäß Schritt b) erhaltenden Zitrusfruchtsaftes in an sich bekannter Weise auf ein Volumen, dass ½ bis 1/10, vorzugsweise ½ bis 1/6, insbesondere ¼ bis 1/6, des Volumens des Zitrusfruchtsaftes entspricht, um ein Konzentrat des Zitrusfruchtsaftes zu erhalten,
wobei die Zitrusfrucht eine Navelorange und die Navelorange eine Newhall Navelorange ist.

4. Verfahren nach Anspruch 3, wobei die für den Mensch unschädliche Säure eine in der Lebensmittelindustrie zugelassene Säure ist einschließlich aber nicht begrenzt auf Zitronensäure und Äpfelsäure.

5. Verfahren nach Anspruch 4, wobei die für den Mensch unschädliche Säure Zitronensäure ist.

6. Verwendung von verarbeitetem Zitrusfruchtsaft oder dessen Konzentrat gemäß irgendeinem der Ansprüche 1 bis 2 zur Herstellung eines eßbaren Produkts.

## Revendications

1. Un jus d'agrume transformé ou un concentré de celui-ci, cependant que ce jus ou le concentré de celui-ci est pratiquement dépourvu d'amertume et d'odeur ou de senteur non avantageuse et présente un taux sucre/acide entre 14/1 et 20/1, de préférence entre 14/1 et 18/1, cependant que l'agrume est une orange Navel et que l'orange Navel est de variété Newhall Navel et que
ce jus d'agrume ou le concentré de celui-ci est produit par une méthode impliquant :
a) de presser un agrume ayant été intégralement nettoyé avec un pressoir pour produire un jus d'agrume tout en ajoutant un acide inoffensif pour l'homme, de façon à ce que le jus d'agrume pressé possède un contenu d'acide total de 0,85 à 1,0 % en poids ;
b) de réchauffer le jus d'agrume obtenu sous a) ci-dessus entre 75±5°C et 80±2°C de 30±10 à 60±5 secondes pour obtenir un jus d'agrume pratiquement dépourvu d'amertume et dépourvu d'odeur non avantageuse ; ou
c) si nécessaire, de concentrer encore le jus d'agrume obtenu sous b) selon une méthode conventionnelle dans le métier pour obtenir un volume de 1/2 à 1/10 ou mieux de 1/2 à 1/6 ou de préférence de 1/4 à 1/6 du volume du jus d'agrume, pour obtenir un concentré de jus d'agrume.

2. Le jus d'agrume transformé ou le concentré de celui-ci selon la revendication n° 1, cependant que le jus d'agrume transformé ou le concentré de celui-ci présente un pH égal ou inférieur à 3,5, de préférence égal ou inférieur à 3,4.

3. Une méthode pour produire un jus d'agrume ou le concentré de celui-ci selon une des revendications 1 ou 2, impliquant :
a) de presser un agrume ayant été intégralement nettoyé avec un pressoir pour produire un jus d'agrume tout en ajoutant un acide inoffensif pour l'homme, de façon à ce que le jus d'agrume pressé possède un contenu d'acide total de 0,85 à 1,0 % en poids ;
b) de réchauffer le jus d'agrume obtenu sous a) ci-dessus entre 75±5°C et 80±2°C de 30±10 à 60±5 secondes pour obtenir un jus d'agrume pratiquement dépourvu d'amertume et dépourvu d'odeur non avantageuse ; ou
c) si nécessaire, de concentrer encore le jus d'agrume obtenu sous b) selon une méthode conventionnelle dans le métier pour obtenir un volume de 1/2 à 1/10 ou mieux de 1/2 à 1/6 ou de préférence de 1/4 à 1/6 du volume du jus d'agrume, pour obtenir un concentré de jus d'agrume ;
cependant que l'agrume est une orange Navel et que l'orange Navel est de variété Newhall Navel.

4. La méthode selon la revendication n° 3, cependant que l'acide inoffensif pour l'homme est un acide autorisé comme additif dans l'industrie alimentaire, pouvant être, sans se limiter à, de l'acide citrique ou de l'acide malique.

5. La méthode selon la revendication n° 4, cependant que l'acide inoffensif pour l'homme est de l'acide citrique.

6. L'utilisation dans la production d'un produit comestible du jus d'agrume transformé ou du concentré de celui-ci selon une des revendications 1 ou 2.
